(19) Europäisches Patentamt
European Patent Office
Office européen des brevets

(11) **EP 3 710 220 B1**

(12) **EUROPÄISCHE PATENTSCHRIFT**

(45) Veröffentlichungstag und Bekanntmachung des Hinweises auf die Patenterteilung:
**15.09.2021 Patentblatt 2021/37**

(21) Anmeldenummer: **18800567.2**

(22) Anmeldetag: **05.11.2018**

(51) Int Cl.:
**B29C 45/18** (2006.01)      **B29C 45/76** (2006.01)
**B29C 45/00** (2006.01)      **B29B 7/60** (2006.01)
**B29B 7/90** (2006.01)       **B29K 105/12** (2006.01)

(86) Internationale Anmeldenummer:
**PCT/EP2018/080200**

(87) Internationale Veröffentlichungsnummer:
**WO 2019/096613 (23.05.2019 Gazette 2019/21)**

(54) **VERFAHREN ZUR HERSTELLUNG VON KUNSTSTOFF-FORMTEILEN**

METHOD FOR PRODUCING PLASTIC MOULDED PARTS

PROCÉDÉ DE FABRICATION DE PIÈCES MOULÉES EN MATÉRIAU SYNTHÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.11.2017 DE 102017126946**

(43) Veröffentlichungstag der Anmeldung:
**23.09.2020 Patentblatt 2020/39**

(73) Patentinhaber: **KraussMaffei Technologies GmbH**
**80997 München (DE)**

(72) Erfinder:
• **MOSER, Stefan**
**85399 Hallbergmoos (DE)**
• **TOPIC, Nicolina**
**81245 München (DE)**
• **SCHADHAUSER, Maximilian**
**82008 Unterhaching (DE)**

(74) Vertreter: **Wilhelm, Ludwig**
**KraussMaffei Group GmbH**
**Krauss-Maffei-Strasse 2**
**80997 München (DE)**

(56) Entgegenhaltungen:
**EP-A1- 2 735 418      WO-A2-2011/066917**
**US-A1- 2012 068 373**

**Beschreibung**

Die Erfindung betrifft ein Verfahren zur Herstellung von Kunststoff-Formteilen gemäß dem Oberbegriff von Patentanspruch 1.

Das Dokument EP2735418A1 offenbart die Steuerung der Zufuhr von aufzuschmelzendem Rohmaterial an Kunststoff, wobei drehbare Dosierschnecken mit einer vorgegebenen Drehgeschwindigkeit angetrieben werden. Die Drehgeschwindigkeiten der beiden Dosierschnecken können so eingestellt werden, dass sich ein bestimmtes Mischungsverhältnis von einem ersten und einem zweiten Rohmaterial einstellt. Es wird vorgeschlagen, dass die Steuerung die Drehgeschwindigkeiten der beiden Dosierschnecken und die Drehgeschwindigkeit der Plastifizierschnecke auf ein vorbestimmtes Verhältnis zueinander einstellt, um das Gewicht des spritzgegossenen Erzeugnisses zu stabilisieren.

Die WO2011/066917A2 offenbart eine Spritzgießmaschine zur Herstellung von faserverstärkten Kunststoff-Formteilen, mit einem Zylinder und mit einer in dem Zylinder dreh- und linearantreibbaren Plastifizierschnecke, wobei in dem Zylinder eine erste Öffnung als Einfüllöffnung für die Zufuhr eines aufzuschmelzenden Kunststoffmaterials vorgesehen ist, und wobei förderabseitig von der ersten Öffnung in dem Zylinder eine zweite Öffnung als Einfüllöffnung für die Zufuhr von einem oder mehreren Faserbündeln vorgesehen ist. Die Faserbündel können von einer oder mehreren Faserspulen abgezogen werden. Bei der Herstellung eines faserverstärkten Kunststoff-Formteils werden die Fasern von der Plastifizierschnecke bei deren Rotation eingezogen und in die Schmelze untergemischt. Dabei durchlaufen die Faserbündel eine Faserbremsvorrichtung.

Das zu verarbeitende Kunststoffmaterial wird als Granulat zugeführt, wobei eine gravimetrische oder eine volumetrische Dosiervorrichtung vorgesehen sein kann.

Beim volumetrischen Dosieren erfolgt der Austrag des Granulats ausschließlich volumenbezogen. Die Dosierorgane einer volumetrisch arbeitenden Dosiervorrichtung sind auf das jeweilige Material zu kalibrieren, d.h. es ist zu bestimmen wie viel Masse das Dosierorgan in einem definierten Zeitraum dosiert. Als Dosierorgan kann beispielsweise eine Dosierschnecke vorgesehen sein. Problematisch bei volumetrischen Dosiervorrichtungen ist, dass Schwankungen in der Schüttdichte nicht automatisch kompensiert werden können. Solche Schwankungen in der Schüttdichte des Granulats führen jedoch zu einer Veränderung im Verhältnis von Fasermaterial und von Kunststoffmaterial bei den spritzgegossenen, faserverstärkten Kunststoff-Formteilen. Bei der Herstellung von faserverstärkten Kunststoff-Formteilen ist es jedoch wünschenswert, dass ein möglichst konstantes Verhältnis von Fasermaterial und von Kunststoffmaterial während der Produktion der faserverstärkten Kunststoff-Formteile beibehalten wird.

Beim gravimetrischen oder gewichtsgeregelten Dosieren messen, d.h. wiegen, eine oder mehrere in geeigneter Weise in die Dosiervorrichtung integrierte Wiegezellen das zu dosierende Granulat. Mittels des Gewichts als Messgröße kann durch Soll/Ist-Vergleich eine Regelung der Dosierung erfolgen. Gravimetrisch arbeitende Dosiervorrichtungen können daher Schwankungen in der Schüttdichte automatisch kompensieren. Nachteilig an gravimetrisch arbeitenden Dosiervorrichtungen ist, dass sie deutlich teurer sind als volumetrische Dosiervorrichtungen, insbesondere aufgrund der Verwendung von hochempfindlichen Wiegezellen und einer relativ komplexen Steuereinheit für den Betrieb der gravimetrischen Dosiervorrichtung.

Ausgehend von dem eingangs genannten Stand der Technik liegt der Erfindung die Aufgabe zugrunde, ein Verfahren anzugeben, mit welchem Kunststoff-Formteile auf einer mit einer Einschnecken-Plastifiziereinheit ausgestatteten Spritzgießmaschine hergestellt werden können, wobei eine volumetrische Dosiervorrichtung für das Kunststoffmaterial verwendet werden kann und gleichwohl ein möglichst konstanter IST-Massestrom an Kunststoffmaterial aufrechterhalten werden kann.

Die Lösung dieser Aufgabe erfolgt durch ein Verfahren mit den Merkmalen von Anspruch 1.

Eine weitere der Erfindung zugrundeliegende Aufgabe kann darin gesehen werden, ein Verfahren anzugeben, mit welchem faserverstärkte Kunststoff-Formteile auf einer mit einer Einschnecken-Plastifiziereinheit ausgestatteten Spritzgießmaschine hergestellt werden können, wobei eine volumetrische Dosiervorrichtung für das Kunststoffmaterial verwendet werden kann und gleichwohl ein konstantes Verhältnis von Fasermaterial und von Kunststoffmaterial in den fertigen faserverstärkten Kunststoff-Formteilen während der Produktion dieser Teile beibehalten werden kann.

Die Lösung dieser weiteren Aufgabe erfolgt durch ein Verfahren mit den Merkmalen von Anspruch 2.

Vorteilhafte Ausgestaltungen und Weiterentwicklungen finden sich in den weiteren Ansprüchen.

Dadurch, dass der IST-Massestrom des Kunststoffmaterials berechnet wird, wobei der IST-Massestrom aus der Rücklaufgeschwindigkeit $V_{screw,back,n}$ der Plastifizierschnecke während eines Schmelzedosiervorgangs, dem Durchmesser der Plastifizierschnecke und der Schmelzedichte errechnet wird, dass der IST-Massestroms des Kunststoffmaterials mit einem SOLL-Massestrom des Kunststoffmaterials verglichen wird, und dass bei einem vorgebbaren Differenzwert zwischen IST-Massestrom des Kunststoffmaterials und dem SOLL-Massestrom des Kunststoffmaterials die Drehzahl $n_d$ des Drehantriebs des Dosierorgans in einer solchen Weise verändert wird, dass der Differenzwert verringert wird, wobei der Differenzwert vorzugsweise Null erreichen soll, kann eine Nachregelung des IST-Massestroms an Kunststoffmaterial erfolgen und somit auf Schwankungen in der Schüttdichte reagiert werden. Bei Schwankungen in der Schüttdichte des Kunststoffmaterials kann somit eine Nachregelung der Dosierleistung, welche dem IST-Massestrom an Kunststoffmaterial entspricht, vorgenommen und der IST-Massestrom konstant gehalten werden. Es wird also eine volumetrische Dosiervorrichtung verwendet, aber für das erfindungsgemäße Verfahren wird der Massestrom an Kunststoffmaterial verwendet, welches von der Dosiervorrichtung in den Zylinder eingegeben wird und nicht der Volumenstrom. Eine Nachregelung der Dosierleistung der volumetrischen Dosiervorrichtung erfolgt also als Ergebnis einer Berechnung des IST-Massestroms des von dieser Dosiervorrichtung in den Zylinder eingegebenen Kunststoffmaterials und eines Vergleichs dieses IST-Massestroms mit einem vorgebbaren SOLL-Massestrom.

Vorliegend soll unter "Schmelzedosiervorgang" der Vorgang verstanden werden, bei dem die Plastifizierschnecke durch eine Drehbewegung Kunststoffgranulat und / oder weitere Komponenten, die durch eine oder mehrere Öffnungen im Plastifizierzylinder zugegeben werden, vermischt, das Gemisch in einen schmelzflüssigen Zustand überführt und das Gemisch zum förderabseitigen Ende der Plastifizierschnecke in den sogenannten Schneckenvorraum fördert. Durch den im Schneckenvorraum entstehenden Druck wird die Plastifizierschnecke während des Schmelzedosiervorgangs entlang ihrer Achse in die der Förderrichtung entgegengesetzte Richtung verschoben.

Die Schmelzedichte $\rho_s$ ist ein Wert, der maßgeblich vom Materialtyp, der Schmelzetemperatur und dem Druck abhängt, mit dem die Schmelze beaufschlagt ist. Zur Charakterisierung von Materialtypen werden deshalb von Materialherstellern Kompressionsversuche durchgeführt und sogenannte pvT-Kurven aufgezeichnet. In diesen Kurven wird das Spezifische Schmelzevolumen $v_s$, das den Kehrwert der Dichte $\rho_s$ darstellt (v=1/p) abhängig von der vorliegenden Temperatur T und dem Druck p aufgetragen. Bei bekanntem Zusammenhang $v_s(p,T)$ kann die Schmelzedichte, $\rho_s$ abhängig von den Umgebungsbedingungen folgendermaßen ermittelt werden:

$$\rho_s(p,T)\_ = 1/[v_s(p,T)]$$

$\rho_s(p,T)$:     Schmelzedichte

p:     Druck

T:     Temperatur

$v_s$:     Spezifisches Schmelzevolumen

Damit wird es möglich, dass auch bei verweilzeitkritischem Kunststoffmaterial der gewünschte IST-Massestrom beibehalten wird. Insbesondere kann die Schnecke in bevorzugter Ausführungsform unterfüttert betrieben werden. Ein unterfütterter Zustand bezeichnet eine Betriebsform, bei der der Schnecke weniger Material zugeführt wird, als diese aus einem vollen Trichter einziehen würde. Bevorzugtes Anwendungsgebiet ist die Herstellung von Kunststoff-Formteilen für optische Zwecke. Kunststoff-Formteile für optische Zwecke, beispielsweise Linsen, sind meist dickwandig und bedürfen einer ausreichend langen Kühlung im Formwerkzeug. Damit während der Abkühlphase der in der Plastifiziereinheit schmelzflüssig vorliegende Kunststoff keine Schädigung durch Polymerkettenabbau oder oxidative Degeneration erfährt, wird die Reduzierung der durchschnittlichen Verweilzeit der Kunststoffschmelze in der Plastifiziereinheit angestrebt. Maßgeblich für die durchschnittliche Verweilzeit ist u.a. das absolut in der Plastifiziereinheit vorliegende Kunststoffvolumen. Da dieses durch einen unterfütterten Betriebszustand gegenüber der Materialzufuhr aus einem vollen Trichter reduziert wird, kann durch einen unterfütterten Betrieb die mittlere Verweilzeit reduziert, und somit der Schädigung der Kunststoffschmelze entgegengewirkt werden.

Ein weiteres Anwendungsgebiet betrifft die Herstellung von faserverstärkten Kunststoff-Formteil. Dabei kann in den Zylinder ein Fasermaterial hinzugegeben und ein faserverstärktes Kunststoff-Formteil hergestellt werden, wobei Endlosfaserstränge über eine Faserbremsvorrichtung und/oder geschnittene Fasern über eine gravimetrische Dosiervorrichtung der Plastifiziereinheit zugeführt werden können. Vorzugsweise kann eine erste Öffnung in dem Zylinder das aufzuschmelzende Kunststoffmaterial als Granulat in den Zylinder eingegeben wird. Förderabseitig von der ersten Öffnung können über eine zweite Öffnung die Endlosfaserstränge und/oder über eine dritte Öffnung die geschnittenen Fasern in den Zylinder eingegeben und von der Plastifizierschnecke durch Rotation eingezogen werden. Es kann aufgeschmolzenes und mit Fasermaterial versetztes Kunststoffmaterial durch einen Einspritzhub der Plastifizierschnecke in ein Formwerkzeug eingespritzt und ein faserverstärktes Kunststoff-Formteil hergestellt werden. Damit wird es möglich, dass auch bei einer Verwendung einer volumetrischen Dosiervorrichtung für das Kunststoffmaterial ein möglichst konstantes Verhältnis von Fasermaterial und von Kunststoffmaterial während der Produktion der faserverstärkten Kunststoff-Formteile beibehalten werden kann.

Gemäß einer weiteren Ausführungsform kann der IST-Volumenstrom des Kunststoffmaterials aus dem während eines Schmelzedosiervorgangs in den Schneckenvorraum geförderten Volumen an aufgeschmolzenem und mit Fasermaterial versetztem Kunststoffmaterial ermittelt werden.

Der IST-Massestrom dm/dt an Fasermaterial kann bei bekannter Faserzuführgeschwindigkeit $v_f$, sowie be-

kannter Faserstrang-Fadenfeinheit $n_{tex}$ und der Faserstranganzahl $n_f$ mithilfe der folgenden Formel berechnet werden:

$$dm_f/dt=v_f*n_f*n_{tex}$$

| | |
|---|---|
| $dm_f/dt$: | Ist-Massestrom an Fasermaterial |
| $v_f$: | Faserzuführgeschwindigkeit |
| $n_f$: | Anzahl zugeführter Faserstränge |
| $n_{tex}$: | Fadenfeinheit eines zugeführten Faserstrangs |

Gemäß einer Weiterentwicklung des erfindungsgemäßen Verfahrens kann eine Veränderung der Dosierdrehzahl $n_d$ von Spritzgießzyklus zu Spritzgießzyklus vorgenommen werden. Es ist aber auch möglich, für eine Veränderung der Dosierdrehzahl $n_d$ einen PI-Regler zu verwenden.

Gemäß einer weiteren Ausführungsform kann der IST-Massestrom über mehrere Spritzgießzyklen hinweg gemittelt werden. Der so gebildete Mittelwert kann dann für eine Veränderung der Drehzahl $n_d$ des Drehantriebs des Dosierantriebs verwendet werden.

Gemäß einer besonders bevorzugten Weiterbildung des erfindungsgemäßen Verfahrens kann der IST-Massestrom an Kunststoffmaterial, $dm_k/dt$ wie folgt berechnet werden:

$$dm_k/dt=D_s*\pi*v_{screw,back,n}* \rho_s(p,T)-dm_f/dt$$

| | |
|---|---|
| $dm_k/dt$: | Ist-Massestrom an Kunststoffmaterial |
| $D_s$: | Schneckennenndurchmesser |
| $v_{screw,back,n}$: | Schneckenrücklaufgeschwindigkeit während des Plastifizierens |
| $\rho_s(p,T)$: | Schmelzedichte |
| $p$: | Druck |
| $T$: | Temperatur |
| $dm_f/dt$: | Ist-Massestrom an Fasermaterial |

Wenn für einen Spritzgießzyklus n der IST-Massestrom des Kunststoffmaterials berechnet wird, kann für einen der darauf folgenden Spritzgießzyklen, insbesondere für den unmittelbar darauf folgenden Spritzgießzyklus n+1, eine Anpassung des IST-Massestroms an den SOLL-Massestrom durch Veränderung der Drehzahl des Drehantrieb des Dosierorgans vorgenommen werden.

In Abhängigkeit von dem zu verarbeitenden Granulat kann als Dosierorgan eine Dosierschnecke oder eine Dosierscheibe verwendet werden.

Bevorzugt können die Endlosfaserstränge von einem mit Faserspulen ausgestatteten Fasergatter abgezogen werden.

Die Faserbremsvorrichtung kann vorzugsweise zwischen dem mit Faserspulen ausgestatteten Fasergatter und der Plastifiziereinheit angeordnet sein und den Fasersträngen, die der Plastifiziereinheit zugeführt werden, eine einstellbare Faserfördereschwindigkeit aufprägen. Diese Geschwindigkeit kann nicht überschritten werden, auch dann nicht, wenn die in der Plastifiziereinheit vorliegende Schnecke mit einer Umfangsgeschwindigkeit rotiert, die größer als die eingestellte Faserfördergeschwindigkeit ist.

Die geschnittenen Fasern können als Schnittglasfasern oder als Bestandteil eines weiteren Kunststoffgranulats zugeführt werden. Außerdem besteht die Möglichkeit, endlose Faserstränge zu schneiden und dann zuzuführen.

Weiterhin kann vorgesehen werden, sowohl Endlosfasern als auch Schnittglasfasern und / oder Faserverstärkte Granulate in die Schmelze einzuarbeiten. Dies kann insbesondere bei der Verarbeitung von Rezyklaten sinnvoll sein.

Nachfolgend soll die Erfindung anhand von Ausführungsbeispielen und unter Bezugnahme auf die Figuren näher erläutert werden. Es zeigen:

Fig. 1    Erste Ausführungsform einer Spritzgießmaschine mit einer erfindungsgemäßen Einschnecken-Plastifiziereinheit;

Fig. 2    Zweite Ausführungsform einer Spritzgießmaschine mit einer erfindungsgemäßen Einschnecken-Plastifiziereinheit.

Fig. 3    Dritte Ausführungsform einer Spritzgießmaschine mit einer erfindungsgemäßen Einschnecken-Plastifiziereinheit

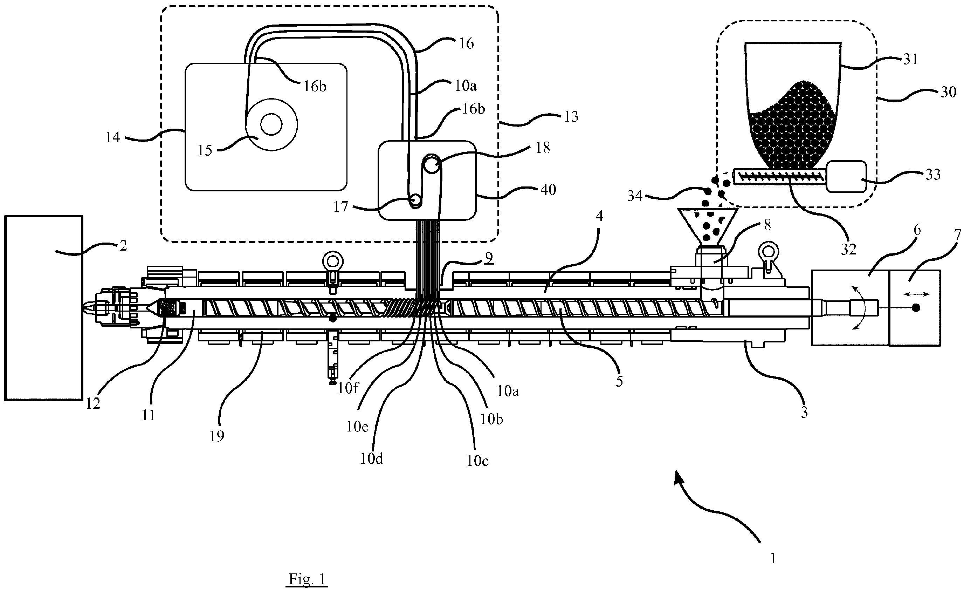

Die Figur 1 zeigt die Verwendung einer erfindungsgemäßen Einschnecken-Plastifiziereinheit als Bestandteil einer Spritzgießmaschine. Die in der Figur 1 dargestellte Spritzgießmaschine 1 umfasst im Wesentlichen eine vorliegend nur schematisch angedeutete Schließeinheit 2 sowie eine erfindungsgemäße Einschnecken-Plastifiziereinheit 3. Die Schließeinheit 2 und die Einschnecken-Plastifiziereinheit 3 sind in an sich bekannter Weise auf einem hier nicht dargestellten Maschinenbett angebracht. Die Einschnecken-Plastifiziereinheit 3 umfasst einen Zylinder 4 mit einer Plastifizierschnecke 5. Auf der Außenseite des Zylinders 4 sind mehrere Heizelemente 19 angebracht. Das hintere Ende der Schnecke 5 ist mit einem Drehantrieb 6 und einem Linearantrieb 7 wirkverbunden. Mittels des Linearantriebs 7 kann die Schnecke 5 in dem Zylinder 4 axial verfahren werden, d.h. die Schnecke 5 ist als Schubschnecke ausgebildet und zum Einspritzen von mit Fasern versetzter Kunststoffschmelze in ein hier nicht dargestelltes in der Schließeinheit 2 befindliches Spritzgießwerkzeug vorgesehen. Im hinteren Endbereich der Schneckengänge ist eine erste Öffnung als Einfüllöffnung 8 für die Zufuhr eines aufzuschmelzenden Kunststoffmaterials vorgesehen.

Das Kunststoffmaterial liegt als Granulat vor und wird von einer volumetrischen Dosiereinrichtung 30 an die Einfüllöffnung 8 abgegeben. Die Dosiervorrichtung 30 umfasst einen Vorratsbehälter 31 zur Aufnahme von Granulat, ein drehbares Dosierorgan 32 und einen Drehantrieb 33 zum Betätigen des Dosierorgans. Dass Kunststoffmaterial in Form von Granulat verwendet wird, soll durch die Punkte in dem Vorratsbehälter 31 andeutet werden. Für einen der Punkte ist das Bezugszeichen 34 angegeben.

Förderabseitig von der ersten Öffnung 8 ist in dem Zylinder 4 eine zweite Öffnung als Einfüllöffnung 9 für die Zufuhr eines Fasermaterials vorgesehen. Das Fasermaterial wird vorzugsweise in Form von räumlich voneinander getrennten Faserbündeln 10a - 10f über eine Faserbremsvorrichtung 40 in die Öffnung 9 eingeführt. Ein Faserbündel kann auch als Roving bezeichnet werden. Am vorderen Ende weist die Schnecke 5 eine Rückströmsperre 11 und förderabseitig von der Rückströmsperre 11 ein mit der Schnecke 5 drehfest verbundenes und mit dieser mitrotierendes Mischteil 12 auf. Die Figur 1 zeigt eine Situation, wie sie am Ende eines Einspritzvorgangs vorliegt. Die Schnecke 5 befindet sich in ihrer vorderen Endposition. Der konisch zulaufende Kopf des Mischteils 12 liegt auf Anschlag in einer passenden konischen Ausnehmung in dem Zylinder 4.

Die Zufuhr des Fasermaterials und die Wirkungsweise der Faserbremsvorrichtung 40 soll anhand des Faserbündels 10a näher beschrieben werden. Der besseren Übersicht halber ist die insgesamt mit dem Bezugszeichen 13 gekennzeichnete und nur schematisch dargestellte Faserzuführeinrichtung im Verhältnis zur Pastifiziereinheit 3 in stark vergrößertem Maßstab dargestellt. Die Faserzuführeinrichtung 13 umfasst einen Faservorratsbehälter 14 mit einer oder mehreren Faserspulen 15, von denen jeweils ein Faserbündel abgezogen werden kann. Bei dem vorliegenden Ausführungsbeispiel gemäß der Figur 1 sollen insgesamt sechs (6) Faserbündel 10a bis 10f der Schnecke 5 zugeführt werden, so dass in dem Faservorratsbehälter 14 demzufolge sechs (6) Faserspulen vorgesehen sind. Vorliegend dargestellt ist nur eine einzige Faserspule 15 für das Faserbündel 10a. Das Faserbündel 10a wird durch einen als Antistatikschlauch ausgebildeten Schlauch 16 geführt, welcher eine Eintrittsöffnung 16a und eine Austrittsöffnung 16b aufweist. Die Eintrittsöffnung 16a ist an einer geeigneten Stelle am oder in dem Faservorratsbehälter 14 angeordnet. Dem Austrittsende 16b nachgeschaltet ist die Faserbremsvorrichtung 40.

Die insgesamt mit dem Bezugszeichen 40 gekennzeichnete Faserbremsvorrichtung erlaubt die Ermittlung des IST-Massestroms an Fasermaterial. Die Faserbremsvorrichtung 40 umfasst im Wesentlichen mindestens eine Umlenkwalze 17 und mindestens eine bremsend angetriebene Bremswalze 18, wobei endlose Fasern schlupffrei über beide Walzen geführt werden. Durch die schlupffreie Führung kann aus der Drehzahl der Bremswalze $n_{bw}$ die Faserzuführgeschwindigkeit $v_f$ bestimmt werden.

Wenn das Faserbündel 10a so von der Schnecke 5 erfasst ist, dass durch die Rotation der Schnecke 5 das Faserbündel 10a in die Schmelze eingezogen und damit von der Faserspule 15 abgezogen wird, wirkt die Faserzuführeinrichtung 13 als Bremse, wobei sich die Bremswirkung und damit die Bremskraft auf die verschiedenen Bestandteile der Faserzuführeinrichtung 13 wie nachfolgend beschrieben verteilt.

Eine erste Bremskraft wird an der Faserspule 15 vorgesehen. Die Faserspule 15 ist drehbar gelagert und wird durch die Reibung des Lagers (nicht dargestellt) so in ihrer Drehung gebremst, dass das Faserbündel 10a mit ca. 10 Newton vorgespannt ist.

Eine zweite Bremskraft wird mittels des Schlauchs 16 erzielt, wobei der Schlauch 16 derart verlegt ist, dass er ein oder mehrere Kreissegmente aufweist Dies führt zu einer zweiten Bremswirkung mit einer zweiten Bremskraft durch den Effekt der Seilreibung nach Euler-Eytelwein. Diese zweite Bremskraft erzeugt etwa 70 Newton der Fasereinzugskraft, so dass die Fasereinzugskraft am Ende des Schlauchs 16 insgesamt ca. 80% der Fasereinzugskraft beträgt.

Eine dritte Bremskraft wird mittels der Bremswalze 18 erzeugt. Das Faserbündel 10a wird um eine frei drehbar gelagerte Umlenkwalze 17 und nachfolgend um eine geschwindigkeitsgeregelte Bremswalze 18 und von dort an die Schnecke 5 geführt. Der Antrieb der Bremswalze 18 erfolgt vorzugsweise mittels eines Getriebemotors. Mittels der Bremswalze 18 werden die letzten 20% der Vorspannkraft aufgebracht. Die Anordnung von Umlenkwalze 17 und Bremswalze 18 ist dergestalt, dass sowohl die Umlenkwalze 17 als auch die Bremswalze 18 jeweils mit 180° umlaufen werden.

Der IST-Massestrom des zugeführten Fasermaterials ist aus den Gegebenheiten der Faserbremsvorrichtung 40 bekannt kann wie folgt ermittelt werden:

$$dm_f/dt = v_f * n_f * n_{tex}$$

| | |
|---|---|
| $dm_f/dt$: | Ist-Massestrom an Fasermaterial |
| $v_f$: | Faserzuführgeschwindigkeit |
| $n_f$: | Anzahl zugeführter Faserstränge |
| $n_{tex}$: | Fadenfeinheit eines zugeführten Faserstrangs |

In Bezug auf die volumetrische Dosiervorrichtung 30 ist zunächst eine Kalibrierung auf das verwendete Material vorzunehmen. Diese Kalibrierung liefert eine initiale Dosierleistung $P_{D,0}$, welche dem Granulatdurchsatz in Gramm pro Umdrehung des Dosierorgans 32 entspricht.

Im nachfolgenden Produktionsbetrieb kann der IST-Massestrom an Kunststoffmaterial eines Spritzgießzyklus n wie folgt ermittelt werden:

$$dm_k/dt = D_s * \pi * v_{screw,back,n} * \rho_s(p,T) - dm_f/dt$$

| | |
|---|---|
| $dm_k/dt$: | Ist-Massestrom an Kunststoffmaterial |
| $D_s$: | Schneckennenndurchmesser |
| $V_{screw,back,n}$: | Schneckenrücklaufgeschwindigkeit während des Plastifizierens |
| $\rho_s(p,T)$: | Schmelzedichte |
| p: | Druck |
| T: | Temperatur |
| $dm_f/dt$: | Ist-Massestrom an Fasermaterial |

Ein Vergleich von SOLL-Massestrom und IST-Massestrom bzw. von SOLL-Dosierleistung und IST-Dosierleistung liefert eine Vorgabe für die Anpassung der Drehzahl $n_d$ des Drehantriebs für das Dosierorgan, insbesondere eine Dosierschnecke. Diese Anpassung kann beispielsweise von Zyklus zu Zyklus erfolgen. Es kann aber auch ein PI-Regler verwendet werden.

Ferner ist es möglich, den IST-Massestrom an Kunststoffmaterial bzw. die IST-Dosierleistung über mehrere Zyklen zu mitteln und eine Anpassung der Drehzahl nd auf der Basis dieses Mittelwerts vorzunehmen.

Mittels des erfindungsgemäßen Verfahrens ist es möglich, volumetrische Dosiervorrichtungen zu verwenden und damit Kosten zu sparen, weil diese deutlich preiswerter sind als gravimetrische Dosiervorrichtungen. Gleichwohl können Schwankungen in der Schüttdichte erkannt und kompensiert werden. Infolgedessen kann ein möglichst konstantes Verhältnis von Fasermaterial und von Kunststoffmaterial in den fertigen faserverstärkten Kunststoff-Formteilen während der Produktion dieser Teile beibehalten werden.

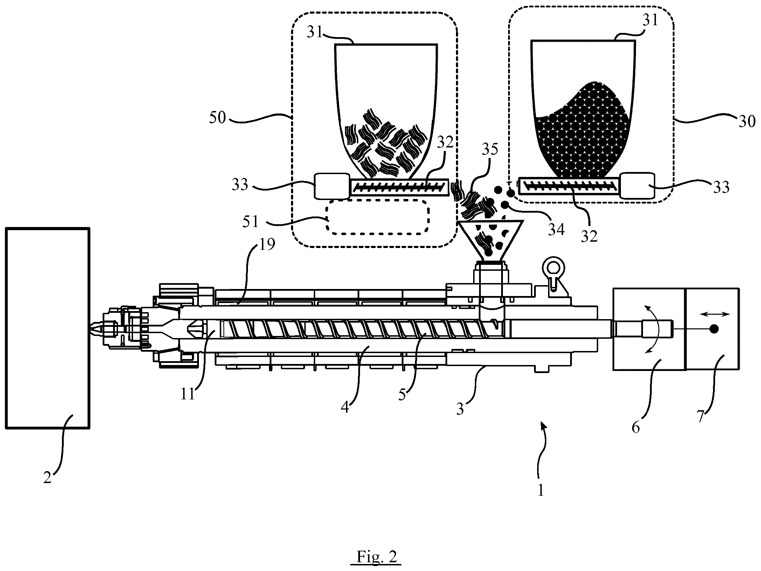

Die Figur 2 zeigt eine zweite Ausführungsform einer Spritzgießmaschine mit einer erfindungsgemäßen Einschnecken-Plastifiziereinheit. Im Unterschied zur Figur 1 wird vorliegend das Fasermaterial nicht in Form von Endlosfasern zugeführt, sondern als geschnittene Fasern. Anders als in Figur 1 werden das Fasermaterial und das Kunststmaterial durch dieselbe Bohrung in den Zylinder gegeben. Die geschnittenen Fasern 35 werden über eine gravimetrische Dosiervorrichtung 50 in den Zylinder 4 eingegeben. Aufgrund der Wiegezelle 51 ist der IST-Massestrom an geschnittenen Fasern 35 bekannt. Infolgedessen kann auch hier ein möglichst konstantes Verhältnis von Fasermaterial und von Kunststoffmaterial in den fertigen faserverstärkten Kunststoff-Formteilen während der Produktion dieser Teile beibehalten werden. Als geschnittene Fasern kommen vorzugsweise Schnittglasfasern zum Einsatz.

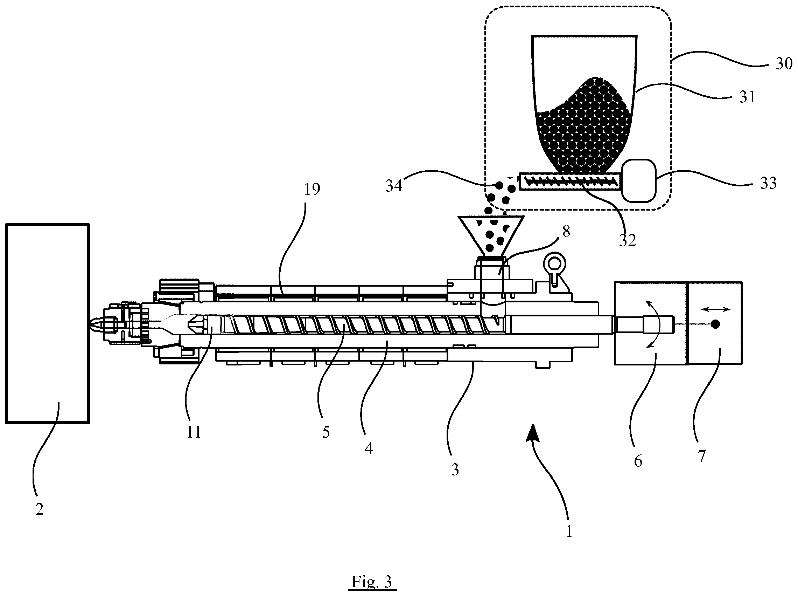

Die Figur 3 zeigt eine erfindungsgemäße Einschnecken-Plastifiziereinheit, die ohne die Zugabe von Fasermaterial mit nur einer Kunststoffkomponente betrieben wird. In diesem Fall kommt nur die volumetrische Dosiervorrichtung 30 zum Einsatz. Mittels des erfindungsgemäßen Verfahrens kann ein möglichst konstanter IST-Massestrom an Kunststoffmaterial aufrechterhalten werden kann. Damit wird es möglich, dass auch bei verweilzeitkritischem Kunststoffmaterial der gewünschte IST-Massestrom beibehalten wird. Insbesondere kann die Schnecke in bevorzugter Ausführungsform unterfüttert betrieben werden. Bevorzugtes Anwendungsgebiet ist die Herstellung von Kunststoff-Formteilen für optische Zwecke.

Nicht dargestellt sind weitere Varianten der Erfindung. Beispielsweise ist es auch möglich, sowohl Endlosfasern als auch Schnittglasfasern in die Schmelze einzuarbeiten.

**Bezugszeichenliste**

| | |
|---|---|
| 1 | Spritzgießmaschine |
| 2 | Schließeinheit |

(fortgesetzt)

| 3 | Einschnecken-Plastifiziereinheit |
|---|---|
| 4 | Zylinder |
| 5 | Plastifizierschnecke |
| 6 | Drehantrieb |
| 7 | Linearantrieb |
| 8 | Erste Einfüllöffnung |
| 9 | Zweite Einfüllöffnung |
| 10a - 10f | Einzelne Faserstränge bzw. Rovings |
| 11 | Rückströmsperre |
| 12 | Mischteil |
| 13 | Faserzuführeinrichtung |
| 14 | Faservorratsbehälter / Fasergatter |
| 15 | Faserspule |
| 15a - 15f | Faserspulen |
| 16 | Antistatikschlauch |
| 16a | Eintrittsöffnung |
| 16b | Austrittsöffnung |
| 17 | Umlenkwalze |
| 18 | Bremswalze |
| 19 | Heizelement |
| 30 | Volumetrische Dosiervorrichtung |
| 31 | Vorratsbehälter |
| 32 | Dosierschnecke |
| 33 | Drehantrieb |
| 34 | Granulat |
| 35 | Geschnittene Glasfasern |
| 40 | Faserbremsvorrichtung |
| 50 | Gravimetrische Dosiervorrichtung |
| 51 | Wiegezelle |

**Patentansprüche**

1. Verfahren zur Herstellung von Kunststoff-Formteilen, mit einer Plastifiziereinheit (3), welche einen Zylinder (4) und in dem Zylinder (4) eine dreh- und linearantreibbare Plastifizierschnecke (5) aufweist, wobei über eine Öffnung (8) in dem Zylinder (4) ein aufzuschmelzendes Kunststoffmaterial (34), vorzugsweise als Granulat, Pulver, Barren oder Flüssigsilikon, in den Zylinder (4) eingegeben wird, wobei das Kunststoffmaterial (34) mittels einer volumetrischen Dosiervorrichtung (30) in den Zylinder (4) eingegeben wird, wobei die volumetrische Dosiervorrichtung (30) einen Vorratsbehälter (31) zur Aufnahme von Kunststoffmaterial (34), ein drehbares Dosierorgan (32) und einen Drehantrieb (33) zum Betätigen des Dosierorgans (32) aufweist, und wobei aufgeschmolzenes Kunststoffmaterial durch einen Einspritzhub der Plastifizierschnecke (5) in ein Formwerkzeug (2) eingespritzt wird,
**dadurch gekennzeichnet, dass**
der IST-Massestrom des Kunststoffmaterials (34) berechnet wird, wobei der IST-Massestrom aus der Rücklaufgeschwindigkeit $v_{screw,back,n}$ der Plastifizierschnecke (5) während eines Schmelzedosiervorgangs, dem Nenndurchmesser der Plastifizierschnecke (5) und der Schmelzedichte errechnet wird, dass der IST-Massestroms des Kunststoffmaterials (34) mit einem SOLL-Massestrom des Kunststoffmaterials (34) verglichen wird, und dass bei einem vorgebbaren Differenzwert zwischen dem IST-Massestrom des Kunststoffmaterials (34) und dem SOLL-Massestrom des Kunststoffmaterials (34) die Drehzahl $n_d$ des Drehantriebs (33) des Dosierorgans (32) in einer solchen Weise verändert wird, dass der Differenzwert verringert wird, wobei der Differenzwert vorzugsweise Null erreichen soll.

**2.** Verfahren nach Anspruch 1,
**dadurch gekennzeichnet, dass**
in den Zylinder (4) Fasermaterial hinzugegeben und ein faserverstärktes Kunststoff-Formteil hergestellt wird, wobei Endlosfaserstränge (10a, 10b, 10c., 10d, 10e, 10f) über eine Faserbremsvorrichtung und/oder geschnittene Fasern (35) über eine gravimetrische Dosiervorrichtung (50) der Plastifiziereinheit (3) zugeführt werden, und wobei aufgeschmolzenes und mit Fasermaterial versetztes Kunststoffmaterial durch einen Einspritzhub der Plastifizierschnecke (5) in ein Formwerkzeug (2) eingespritzt wird.

**3.** Verfahren nach Anspruch 2,
**dadurch gekennzeichnet, dass**
über eine erste Öffnung (8) in dem Zylinder (4) das aufzuschmelzende Kunststoffmaterial als Granulat (34) in den Zylinder (4) eingegeben wird, dass förderabseitig von der ersten Öffnung (8) über eine zweite Öffnung (9) die Endlosfaserstränge (10a, 10b, 10c, 10d, 10e, 10f) und/oder über die erste Öffnung (8) oder über eine dritte Öffnung die geschnittenen Fasern (35) in den Zylinder (4) eingegeben und von der Plastifizierschnecke (5) durch Rotation eingezogen werden.

**4.** Verfahren nach einem der vorstehenden Ansprüche,
**dadurch gekennzeichnet, dass**
der IST-Massestrom an Fasermaterial bei der Zuführung von Endlosfasern oder der Zuführung von geschnittenen Endlosfasern wie folgt berechnet wird:

$$dm_f/dt = v_f * n_f * n_{tex}$$

wobei

$dm_f/dt$: Ist-Massestrom an Fasermaterial
$v_f$: Faserzuführgeschwindigkeit
$n_f$: Anzahl zugeführter Faserstränge
$n_{tex}$: Fadenfeinheit eines zugeführten Faserstrangs

**5.** Verfahren nach einem der vorstehenden Ansprüche,
**dadurch gekennzeichnet, dass**
eine Veränderung der Dosierdrehzahl $n_d$ von Spritzgießzyklus zu Spritzgießzyklus vorgenommen wird oder dass für eine Veränderung der Dosierdrehzahl $n_d$ ein PI-Regler verwendet wird.

**6.** Verfahren nach einem der vorstehenden Ansprüche,
**dadurch gekennzeichnet, dass**
der IST-Massestrom an Kunststoffmaterial über mehrere Spritzgießzyklen hinweg gemittelt wird und der so gebildete Mittelwert für eine Veränderung der Drehzahl $n_d$ des Drehantriebs (33) des Dosierorgans (32) verwendet wird.

**7.** Verfahren nach einem der vorstehenden Ansprüche,
**dadurch gekennzeichnet, dass**
der IST-Massestrom an Kunststoffmaterial wie folgt berechnet wird:

$$dm_k/dt = [D_s^2/4] * \pi * v_{screw,back,n} * \rho_s(p,T) - dm_f/dt$$

wobei

$dm_k/dt$: Ist-Massestrom an Kunststoffmaterial

$D_s$: Schneckennenndurchmesser

$v_{screw,back,n}$: Schneckenrücklaufgeschwindigkeit während des Plastifizierens

$\rho_s(p,T)$: Schmelzedichte

p: Druck

T: Temperatur

$dm_f/dt$: Ist-Massestrom an Fasermaterial

**8.** Verfahren nach einem der vorstehenden Ansprüche,
**dadurch gekennzeichnet, dass**
für einen Spritzgießzyklus der IST-Massestrom des Kunststoffmaterials berechnel wird und dass für einen der darauf folgenden Spritzgießzyklen, insbesondere für den unmittelbar darauf folgenden Spritzgießzyklus, eine Anpassung des IST-Massestroms an den SOLL-Massestrom durch Veränderung der Drehzahl $n_d$ des Drehantriebs (33) des Dosierorgans (32) vorgenommen wird.

**9.** Verfahren nach einem der vorstehenden Ansprüche,
**dadurch gekennzeichnet, dass**
als Dosierorgan eine Dosierschnecke (32) oder eine Dosierscheibe verwendet wird.

**10.** Verfahren nach einem der vorstehenden Ansprüche,
**dadurch gekennzeichnet, dass**
die Endlosfaserstränge (10a, 10b, 10c, 10d, 10e, 10f) von einem mit Faserspulen (15) ausgestatteten Fasergatter (18) abgezogen werden.

**11.** Verfahren nach einem der vorstehenden Ansprüche,
**dadurch gekennzeichnet, dass**
die Faserbremsvorrichtung (40) eine einstellbare, schlupffreie Geschwindigkeit auf die Faserstränge (10a, 10b, 10c, 10d, 10e, 10f) aufprägt.

**12.** Verfahren nach einem der vorstehenden Ansprüche,
**dadurch gekennzeichnet, dass**
die geschnittenen Fasern als Schnittglasfasern oder als Bestandteil eines Kunststoffgranulats zugeführt werden.

**Claims**

**1.** A method for producing plastic moulded parts, with a plasticizing unit (3), which has a cylinder (4), and in the cylinder (4) a rotatably and linearly drivable plasticizing screw (5), wherein via an opening (8) in the cylinder (4) a plastic material (34) which is to be melted, preferably as granulate, powder, bars or liquid silicone, is fed into the cylinder (4), wherein the plastic material (34) is fed into the cylinder (4) by means of a volumetric dosing device (30), wherein the volumetric dosing device (30) has a storage container (31) for receiving plastic material (34), a rotatable dosing member (32) and a rotary drive (33) for actuating the dosing member (32), and wherein melted plastic material is injected by means of an injection stroke of the plasticizing screw (5) into a mould (2),
**characterized in that**
the actual mass flow of the plastic material (34) is calculated, wherein the actual mass flow is calculated from the return speed $v_{screw,back,n}$ of the plasticizing screw (5) during a melt dosing process, the nominal diameter of the plasticizing screw (5) and the melt density, that the actual mass flow of the plastic material (34) is compared with a nominal mass flow of the plastic material (34), and that with a predefinable differential value between the actual mass flow of the plastic material (34) and the nominal mass flow of the plastic material (34) the rotational speed $n_d$ of the rotary drive (33) of the dosing member (32) is altered in such a way that the differential value is reduced, wherein the differential value is preferably to reach zero.

**2.** The method according to Claim 1,
**characterized in that**
fibrous material is added into the cylinder (4) and a fibre-reinforced plastic moulded part is produced,
wherein endless fibre strands (10a, 10b, 10c, 10d, 10e, 10f) are fed by means of a fibre-braking device and/or cut fibres (35) are fed by means of a gravimetric dosing device (50) to the plasticizing unit (3), and wherein plastic material which is melted and is mixed with fibrous material is injected into a mould (2) by means of an injection stroke of the plasticizing screw (5).

**3.** The method according to Claim 2,
**characterized in that**
the plastic material which is to be melted is fed as granulate (34) into the cylinder (4) via a first opening (8) in the cylinder (4), that remote from the first opening (8) with respect to conveying, via a second opening (9) the endless fibre strands (10a, 10b, 10c, 10d, 10e, 10f) and/or via the first opening (8) or via a third opening the cut fibres (35) are fed into the cylinder (4) and are drawn in by the plasticizing screw (5) through rotation.

**4.** The method according to one of the preceding claims, **characterized in that**
the actual mass flow of fibrous material in the delivering of endless fibres or the delivering of cut endless fibres is calculated as follows:

$$dm_f/dt = v_f * n_f * n_{tex}$$

wherein

$dm_f/dt$: actual mass flow of fibrous material
$v_f$: fibre feeding speed
$n_f$: number of fed fibre strands
$n_{tex}$: denier of a fed fibre strand

**5.** The method according to one of the preceding claims, **characterized in that**
an alteration of the dosing rotational speed $n_d$ is carried out from injection moulding cycle to injection moulding cycle, or that a PI-controller is used for an alteration of the dosing rotational speed $n_d$.

**6.** The method according to one of the preceding claims, **characterized in that**
the actual mass flow of plastic material is averaged over several injection moulding cycles and the thus formed mean value is used for an alteration of the rotational speed $n_d$ of the rotary drive (33) of the dosing member (32).

**7.** The method according to one of the preceding claims, **characterized in that**
the actual mass flow of plastic material is calculated as follows:

$$dm_k/dt = [D_s^2/4] * \Pi * V_{screw,back,n} * \rho_s(p,T) - dm_f/dt$$

wherein

$dm_k/dt$: actual mass flow of plastic material
$D_s$: screw nominal diameter
$V_{screw,back,n}$: screw return speed during plasticizing
$\rho_s(p,T)$: melt density
$p$: pressure
$T$: temperature
$dm_f/dt$: actual mass flow of fibrous material

**8.** The method according to one of the preceding claims, **characterized in that**
for an injection moulding cycle the actual mass flow of the plastic material is calculated and that for one of the subsequent injection moulding cycles, in particular for the immediately subsequent injection moulding cycle, an adaptation is carried out of the actual mass flow to the nominal mass flow by altering the rotational speed $n_d$ of the rotary drive (33) of the dosing member (32).

**9.** The method according to one of the preceding claims, **characterized in that**
a dosing screw (32) or a dosing disk is used as dosing member.

**10.** The method according to one of the preceding claims, **characterized in that**
the endless fibre strands (10a, 10b, 10c, 10d, 10e, 10f) are drawn off from a fibre gate (18) which is equipped with fibre spools (15).

**11.** The method according to one of the preceding claims, **characterized in that**
the fibre-braking device (40) impresses an adjustable, slip-free speed on the fibre strands (10a, 10b, 10c, 10d, 10e, 10f).

**12.** The method according to one of the preceding claims, **characterized in that**
the cut fibres are supplied as chopped glass fibres or as component of a plastic granulate.

**Revendications**

**1.** Procédé de fabrication de pièces moulées en matériau synthétique, comprenant une unité de plastification (3) qui présente un cylindre (4) et une vis de plastification (5) pouvant être entraînée de manière linéaire et en rotation dans le cylindre (4), dans lequel un matériau synthétique (34), de préférence sous forme de granulat, de poudre, de barres ou de silicone liquide est introduit par une ouverture (8) dans le cylindre (4), dans lequel le matériau synthétique (34) est introduit dans le cylindre (4) au moyen d'un dispositif de dosage volumétrique (30), dans lequel le dispositif de dosage volumétrique (30) présente un récipient de stockage (31) pour recevoir du matériau plastique (34), un organe de dosage rotatif (32) et un entraînement rotatif (33) pour actionner l'organe de dosage (32), et dans lequel du matériau synthétique fondu est injecté dans un outil de moulage (2) par une course d'injection de la vis de plastification (5),
**caractérisé en ce que**
le débit massique RÉEL du matériau synthétique (34) est calculé, dans lequel le débit massique RÉEL est calculé à partir de la vitesse de recul $V_{screw,back,n}$ de la vis de plastification (5), pendant une procédure de dosage de masse fondue, du diamètre nominal de la vis de plastification (5) et de la densité de masse fondue, que le débit massique RÉEL du matériau synthétique (34) est comparé à un débit massique DE CONSIGNE du matériau synthétique (34) et qu'en cas de valeur de différence pouvant être prédéfinie entre le débit massique RÉEL du matériau synthétique (34) et le débit massique DE CONSIGNE du matériau synthétique (34), le nombre de tours $n_d$ de l'entraînement en rotation (33) de l'organe de dosage (32) est modifié de telle façon que la valeur de différence est réduite, dans lequel la valeur de différence doit atteindre zéro de préférence.

**2.** Procédé selon la revendication 1,
**caractérisé en ce que**
du matériau en fibre est ajouté dans le cylindre (4) et une pièce moulée en matériau synthétique renforcé par fibres est fabriquée, dans lequel sont dirigés vers l'unité de plastification (3), des écheveaux de fibre sans fin (10a, 10b, 10c, 10d, 10e, 10f) par un dispositif de freinage de fibres et/ou des fibres coupées (35) par un dispositif de dosage gravimétrique (50), et dans lequel du matériau synthétique fondu et mélangé avec du matériau en fibres est injecté dans un outil de moulage (2) par une course d'injection de la vis de plastification (5).

**3.** Procédé selon la revendication 2,
**caractérisé en ce que**
le matériau synthétique à faire fondre est introduit en tant que granulat (34) dans le cylindre (4) par une première ouverture (8) dans le cylindre (4), qu'en aval d'avancement de la première ouverture (8) sont introduits dans le cylindre (4), des écheveaux de fibre sans fin (10a, 10b, 10c, 10d, 10e, 10f) par une deuxième ouverture (9) et/ou les fibres coupées (35) par la première ouverture (8) ou par une troisième ouverture et sont étiré(e)s par rotation par la vis de plastification (5).

**4.** Procédé selon l'une des revendications précédentes, **caractérisé en ce que**
le débit massique RÉEL de matériau de fibres lors de l'amenée des fibres sans fin ou de l'amenée des fibres sans fin coupées est déterminé comme suit :

$$dm_f/dt = v_f * n_f * n_{tex}$$

dans lequel

dm$_f$/dt : débit massique réel de matériau de fibres
$v_f$ : vitesse d'amenée des fibres
$n_f$ : nombre d'écheveaux de fibres amenés
$n_{tex}$ : finesse de fil d'un écheveau de fibres amené.

**5.** Procédé selon l'une des revendications précédentes, **caractérisé en ce qu'**
une modification du nombre de tours de dosage $n_d$ de cycle d'injection à cycle d'injection est effectuée ou qu'un régulateur PI est employé pour une modification du nombre de tours de dosage $n_d$.

**6.** Procédé selon l'une des revendications précédentes, **caractérisé en ce que**
le débit massique RÉEL de matériau synthétique est moyenné sur plusieurs cycles d'injection et la valeur moyenne ainsi formée est employée pour une modification du nombre de tours de dosage $n_d$ de l'entraînement en rotation (33) de l'organe de dosage (32) .

**7.** Procédé selon l'une des revendications précédentes, **caractérisé en ce que**
le débit massique RÉEL de matériau synthétique est calculé comme suit :

$$dm_k/dt = [D_s^2/4] * \Pi * V_{screw,back,n} * \rho_s(p,T) - dm_f/dt$$

dans lequel

   $dm_k/dt$ : débit massique réel de matériau synthétique
   $D_s$ : diamètre nominal de vis
   $V_{screw,back,n}$ : vitesse de recul de vis pendant la plastification
   $\rho_s(p,T)$ : densité de masse fondue
   p : pression
   T : température
   $dm_f/dt$ : débit massique réel de matériau de fibres.

**8.** Procédé selon l'une des revendications précédentes, **caractérisé en ce que**
le débit massique RÉEL du matériau synthétique est calculé pour un cycle d'injection et que pour un des cycles d'injection suivants, en particulier pour le cycle d'injection suivant immédiatement, une adaptation du débit massique RÉEL au débit massique DE CONSIGNE est effectuée par modification du nombre de tours $n_d$ de l'entraînement en rotation (33) de l'organe de dosage (32).

**9.** Procédé selon l'une des revendications précédentes, **caractérisé en ce qu'**
une vis de dosage (32) ou un disque de dosage est employé(e) comme organe de dosage.

**10.** Procédé selon l'une des revendications précédentes, **caractérisé en ce que**
les écheveaux de fibre sans fin (10a, 10b, 10c, 10d, 10e, 10f) sont tirés d'un râtelier de fibres (18) doté de bobines de fibres (15).

**11.** Procédé selon l'une des revendications précédentes, **caractérisé en ce que**
le dispositif de freinage de fibres (40) imprègne une vitesse réglable sans glissement sur les écheveaux de fibre sans fin (10a, 10b, 10c, 10d, 10e, 10f).

**12.** Procédé selon l'une des revendications précédentes, **caractérisé en ce que**
les fibres coupées sont amenées en tant que fibres de verre coupées ou en tant que composante d'un granulat synthétique.

EP 3 710 220 B1

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2735418 A1
- WO 2011066917 A2